# FASCICULE DE BREVET EUROPEEN

(11) **EP 2 683 658 B1**
(45) Date de publication et mention de la délivrance du brevet: **19.11.2014**
(21) Numéro de dépôt: 12711945.1
(22) Date de dépôt: 28.02.2012
(51) Int. Cl.: C02F 1/36, B60H 3/02, C02F 1/02

(54) **DISPOSITIF DE DÉCONTAMINATION D'UN LIQUIDE, SYSTÈME DE RAFRAICHISSEMENT D'AIR PAR NÉBULISATION MUNI D'UN TEL DISPOSITIF, PROCÉDÉ DE RAFRAICHISSEMENT, ET VÉHICULE AUTOMOBILE ASSOCIÉ**
VORRICHTUNG ZUR DEKONTAMINIERUNG EINER FLÜSSIGKEIT, SYSTEM ZUM KÜHLEN VON LUFT DURCH VERDAMPFUNG MIT EINER SOLCHEN VORRICHTUNG, KÜHLVERFAHREN UND ENTSPRECHENDES KRAFTFAHRZEUG
DEVICE FOR DECONTAMINATING A LIQUID, SYSTEM FOR COOLING AIR BY VAPORIZATION EQUIPPED WITH SUCH A DEVICE, COOLING PROCESS, AND ASSOCIATED AUTOMOTIVE VEHICLE

(30) Priorité: 07.03.2011 FR 1151846
(43) Date de publication de la demande: 15.01.2014
(73) Titulaire: Peugeot Citroën Automobiles SA, 78140 Vélizy Villacoublay (FR)
(72) Inventeur: DUMUR, Denis, F-78990 Elancourt (FR); PINTAT, Bruno, F-92140 Clamart (FR)
(86) Numéro de dépôt international: PCT/FR2012/050405
(87) Numéro de publication internationale: WO 2012/120219

(56) Documents cités:
- EP-A1- 1 736 442
- WO-A1-2006/040648
- DE-U1-202008 000 243
- US-A- 4 350 286
- US-A- 5 327 739

## Description

L'invention concerne principalement un dispositif de décontamination d'un liquide.

L'invention concerne également un système de rafraichissement d'air par nébulisation dans lequel est intégré le dispositif de l'invention.

L'invention concerne en outre une console centrale de véhicule automobile comprenant un tel dispositif, un procédé de rafraichissement de l'air d'une enceinte par nébulisation d'un liquide décontaminé ainsi qu'un véhicule, notamment un véhicule automobile, comportant le dispositif de l'invention.

Le stockage de l'eau, de façon générale, et plus spécifiquement dans un véhicule automobile, pose des problèmes de conservation.

En effet, le développement de germes et de bactéries est inévitable dans un liquide utilisé dans un environnement non stérile.

L'eau stockée dans un véhicule automobile peut être utilisée dans des dispositifs de confort tels qu'une théière, une machine à café ou encore un système de rafraichissement d'air.

Certains systèmes de rafraichissement d'air mettent en jeu des fines gouttelettes d'eau formées par nébulisation, atomisation ou pulvérisation. C'est le cas par exemple du système décrit dans le document US5327739A.

Dans ces systèmes, les fines gouttelettes sont envoyées vers les utilisateurs de sorte qu'un contact est établi entre ces gouttelettes et la peau de l'utilisateur. En outre, ces fines gouttelettes d'eau, lorsqu'elles sont dirigées vers le visage de l'utilisateur, peuvent être inhalées.

Il s'avère donc nécessaire d'assurer l'utilisation d'un liquide suffisamment exempt de germes nocifs lorsqu'il est utilisé dans un système de rafraichissement d'air.

On connait des moyens permettant de traiter des liquides stockés afin d'en éliminer les principaux germes ou bactéries.

Il s'agit par exemple de l'utilisation de réservoirs amovibles permettant un lavage régulier par l'utilisateur. Mais ce système est contraignant pour l'utilisateur.

Il s'agit également de l'utilisation d'une bonbonne de liquide consommable ou du traitement du liquide par un système photo catalytique. Mais ces systèmes sont onéreux, et dans le cas de la bonbonne, contraignants, puisque l'utilisateur doit régulièrement changer la bonbonne.

Dans ce contexte, la présente invention vise un dispositif de décontamination du liquide qui ne soit pas contraignant pour l'utilisateur, qui assure une bonne efficacité d'élimination des germes présents dans le liquide, et qui ne soit pas couteux tant à la mise en oeuvre du dispositif qu'au cours de son utilisation.

A cet effet, l'invention porte sur un dispositif de décontamination d'un liquide contenu dans un réservoir qui est essentiellement caractérisé en ce qu'il comprend des moyens aptes à former une boucle de recirculation du liquide depuis et jusqu'au dit réservoir, laquelle boucle de recirculation comprend un système à ultrasons qui est plongé dans le liquide formant au moins en partie système de décontamination du dit liquide.

L'invention porte en outre sur un système de rafraichissement de l'air d'une enceinte par nébulisation à partir d'un liquide de nébulisation contenu dans un réservoir de nébulisation conforme au préambule de la revendication 1 qui est essentiellement caractérisé en ce qu'il comprend le dispositif de décontamination précédemment défini conforme à l'objet de la partie caractérisante de la revendication 1

Le système de rafraichissement de l'invention peut également comporter les caractéristiques optionnelles suivantes considérées isolément ou selon toutes les combinaisons techniques possibles :
- le nébuliseur à ultrasons et le système à ultrasons sont constitués d'un oscillateur piézo-électrique qui est plongé dans le liquide de nébulisation formant liquide à décontaminer lorsque le dit dispositif de décontamination est en fonctionnement.
- le système de décontamination comprend une résistance chauffante apte à chauffer le liquide à décontaminer à une température d'environ 70°C.
- le système de rafraichissement comporte :
   - une grille susceptible d'adopter une position d'ouverture dans laquelle elle est traversée par au moins les fines gouttelettes circulant dans le conduit d'entraînement, ce dont il résulte la formation de condensats, et des moyens d'obturation de la grille qui adopte ainsi une position de fermeture dans laquelle les fines gouttelettes ruissellent le long de sa surface ce dont il résulte la formation d'un liquide ruisselant, et
   - un réservoir annexe de liquide couplé au réservoir de nébulisation et recevant les dits condensats lorsque la grille est en position d'ouverture et le liquide ruisselant lorsque la grille est en position de fermeture,
      la boucle de circulation comprenant au moins le réservoir de nébulisation, au moins une partie du conduit d'entraînement des fines gouttelettes jusqu'à la grille, la grille en position de fermeture, et le réservoir annexe.
- le système de rafraichissement comporte des moyens d'entrée d'air de l'enceinte dans le système de rafraichissement, des moyens d'accélération d'air de façon à créer un flux d'air soufflé apte à entraîner les fines gouttelettes vers la grille en position ouverte ou fermée.

L'invention porte en outre sur une console centrale de véhicule notamment automobile qui comprend le système de rafraichissement précédemment défini et qui est orienté de façon que l'air rafraichi soufflé soit dirigé vers les sièges arrière du dit véhicule.

L'invention porte également sur un procédé de rafraichissement de l'air d'une enceinte à partir d'un système de nébulisation d'un liquide mettant en oeuvre le système de rafraichissement précédemment défini, lequel procédé comprend au moins les étapes suivantes :
- un cycle de rafraichissement au cours duquel des fines gouttelettes générées par un nébuliseur à ultrasons qui est plongé dans le liquide de nébulisation d'un réservoir de nébulisation, sont entraînées vers l'enceinte, et
- un cycle de décontamination au cours duquel le liquide à décontaminer stocké dans le réservoir de nébulisation subit une étape de décontamination en étant soumis au nébuliseur à ultrasons et en circulant dans une boucle de recirculation depuis et jusqu'au réservoir de nébulisation,
- la puissance du nébuliseur à ultrasons est supérieure lors de son fonctionnement au cours du cycle de décontamination, comparée à sa puissance lors de son fonctionnement au cours du cycle de rafraichissement.

De préférence, le cycle de décontamination est commandé en fonctionnement :
- soit lorsque qu'aucun cycle de rafraîchissement n'a été effectué pendant un temps déterminé,
- soit au bout d'une période déterminée de fonctionnement du cycle de rafraichissement,
- soit au bout d'une période déterminée de fonctionnement ou non du cycle de rafraichissement,
- soit selon le niveau de liquide contenu dans le réservoir de nébulisation,
- soit selon la température du liquide contenu dans le réservoir de nébulisation,
- soit selon une pluralité de critères précédemment définis.

L'invention porte enfin sur un véhicule, notamment un véhicule automobile, comprenant le dispositif de décontamination précédemment défini.

D'autres caractéristiques et avantages de l'invention ressortiront clairement de la description qui en est donnée ci-dessous, à titre indicatif et nullement limitatif, en référence aux figures annexées parmi lesquelles :
- la figure 1 est une représentation schématique en perspective d'une console centrale de véhicule automobile comprenant le dispositif de décontamination de l'invention formant partie d'un système de rafraichissement d'air par nébulisation représenté en fonctionnement, et
- la figure 2 est la même représentation schématique que celle de la figure 1 sur laquelle le dispositif de décontamination est représenté en fonctionnement, tandis que le système de rafraichissement d'air par nébulisation est à l'arrêt.

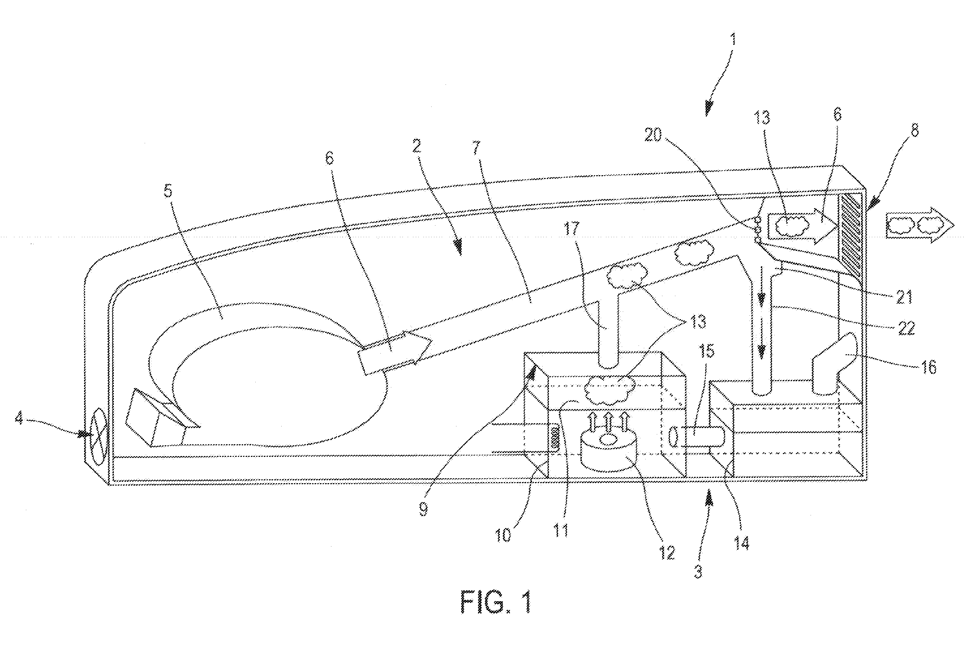

En référence à la figure 1, la console centrale 1 d'un véhicule automobile située traditionnellement sous le tableau de bord et positionné entre les sièges du conducteur et du passager avant, comprend un système de rafraichissement d'air par nébulisation 2 et le dispositif de décontamination de l'invention 3.

Le système de rafraichissement d'air 2 et le dispositif de décontamination 3 comportent de nombreux éléments communs pour lesquels les mêmes références sont utilisées dans la description qui suit.

Le système de rafraichissement d'air par nébulisation 2 comprend une entrée d'air 4, de préférence munie d'un filtre non représenté. L'air amené dans le système de rafraichissement 2 est celui de l'habitacle du véhicule.

A cet effet, un pulseur d'air 5 aspire l'air de l'habitable du véhicule au moyen d'une turbine non représentée de sorte que l'air pénètre dans le système de rafraichissement par l'entrée d'air 4.

Par ailleurs, le pulseur d'air 5 génère un flux d'air 6 qui est soufflé dans un conduit d'entraînement 7 en direction de la sortie 8 du système de rafraichissement 2 vers l'habitacle du véhicule.

Le système de rafraichissement d'air 2 comprend en outre une chambre de nébulisation 9 constituée d'un réservoir de nébulisation 10 rempli de liquide de nébulisation 11, dans cet exemple de l'eau.

Un nébuliseur à ultrasons 12 constitué d'un oscillateur piézo-électrique 12 est plongé dans le liquide de nébulisation 11.

De façon bien connue de l'homme du métier, un nébuliseur à ultrasons 12 fonctionnant à une fréquence d'environ 2 mégaHertz génère une brume composée de fines gouttelettes de liquide 13 de taille moyenne inférieure à 5 micromètres.

Dans cet exemple, l'élément vibrant provoquant la formation des fines gouttelettes de liquide 13 est l'oscillateur piézo-électrique 12 sous tension alimenté de façon connue par un courant continu très basse tension par exemple de 12 ou de 20 Volts.

La quantité d'eau 11 présente dans le réservoir de nébulisation 10 doit toujours être suffisant pour que l'oscillateur piézo-électrique soit immergé.

A cet effet, un réservoir annexe 14 est relié au réservoir de nébulisation 10 au moyen d'un conduit 15. Le réservoir annexe 14 peut être rempli directement par l'utilisateur au moyen d'un goulot 16 donnant accès par l'utilisateur au réservoir annexe 14 depuis l'habitable du véhicule.

Le système comportera de préférence un détecteur de niveau du liquide de nébulisation 11 non représenté afin de ne pas détériorer le fonctionnement du système de rafraichissement 2 lorsque la quantité d'eau 11 dans le réservoir de nébulisation 10 est insuffisante.

Les fines gouttelettes de liquide 13 générées par le nébuliseur à ultrasons 12 sont injectées dans le conduit d'entraînement 7 via un conduit d'acheminement 17 reliant la chambre de nébulisation 9 au conduit d'entraînement 7. Pour ce faire, le nébuliseur à ultrasons 12 peut être couplé à un ventilateur non représenté qui va générer un flux d'air secondaire entraînant les fines gouttelettes de liquide 13 jusqu'au conduit d'entraînement 7.

Dans une variante non représentée, une partie du flux d'air 6 peut être détourné du conduit d'entraînement 7 pour participer à l'entraînement des fines gouttelettes de liquide 13 vers le dit conduit d'entraînement 7 via le conduit d'acheminement 17.

Les fines gouttelettes d'eau 13 qui pénètrent dans le conduit d'entraînement 7 vont se condenser au contact des parois du dit conduits 7. Pour éviter ce phénomène, une grille 20 est disposée à l'extrémité du conduit d'entraînement 7 de façon à forcer et à localiser la condensation au niveau de la grille 20.

Les condensats issus de la condensation des fines gouttelettes d'eau 13 sont récupérés dans un bac à condensats 21 qui est agencé de façon que l'évacuation des condensats puissent s'effectuer par gravité quelque soit l'inclinaison du véhicule.

Par ailleurs, le bac à condensats 21 se prolonge vers le bas par un conduit d'évacuation 22 qui débouche dans le réservoir annexe 14.

Par cet agencement, les condensats formés au niveau de la grille sont recyclés dans le système de rafraichissement d'air 2 et subissent de nouveau une nébulisation.

Le mélange de flux d'air 6 et de fines gouttelettes d'eau 13 qui a traversé la grille 20 est acheminé jusqu'à la sortie 8 faite d'un diffuseur 13 orientable par l'utilisateur.

Le système de rafraichissement 2 présente en outre un dispositif de commande non représenté qui permet à l'utilisateur de régler la puissance de nébulisation et la vitesse de sortie du flux d'air contenant les fines gouttelettes d'eau. Le dispositif de commande pourra également commander de façon automatique le fonctionnement du système de rafraichissement selon la température et/ou le degré d'hygrométrie de l'air présent dans l'habitacle du véhicule automobile.

Ce système présente notamment l'avantage d'être indépendant de tout autre système de ventilation et/ou de climatisation.

Un tel système permet d'abaisser la température de l'air soufflé en direction des passagers d'environ 10°C par rapport à la température de l'air ambiant dans le véhicule. Bien entendu, la finesse des gouttelettes est telle que l'utilisateur ne ressentira qu'une sensation de fraîcheur sans percevoir de sensation d'humidité.

Le système de décontamination 3 du liquide de nébulisation 11 est intégré au système de rafraichissement d'air 2 précédemment décrit.

Ce système de décontamination 3 est susceptible de fonctionner lorsque le système de rafraichissement est à l'arrêt.

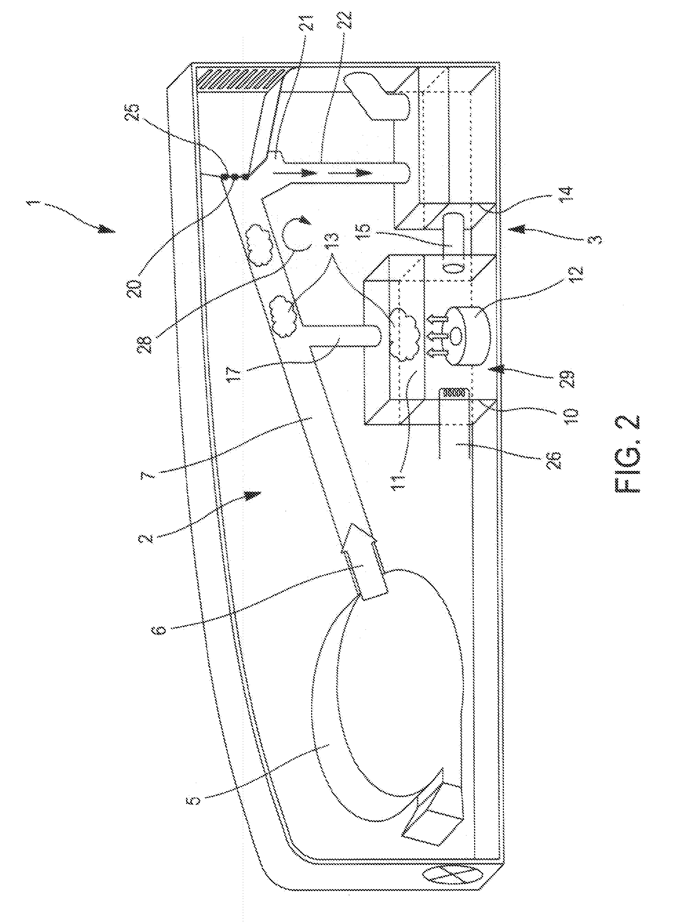

En référence à la figure 2, la grille 20 comporte un système de volets motorisés 25 pouvant être commandés en fermeture au moyen d'un dispositif de commande non représenté.

La fermeture des volets motorisés 25 conduit à l'isolation entre le conduit d'acheminement 7 et l'habitacle.

Le système de décontamination 3 comprend alors le pulseur 5, le réservoir de nébulisation 10, le nébuliseur à ultrasons 12, la grille 20 avec les volets 25 en position fermée et le réservoir annexe 14 selon le fonctionnement qui suit.

L'oscillateur piézo-électrique 12 permet de part son fonctionnement de décontaminer le liquide 11 dans lequel il est immergé. Pour ce faire, la puissance de l'oscillateur piézo-électrique 12 sera plus importante que sa puissance utilisée lors de son fonctionnement dans le cadre du système de rafraîchissement précédemment décrit.

Par exemple, dans le cadre du fonctionnement du système de rafraichissement 2, la puissance de l'oscillateur piézo-électrique 12 sera de 0,15 l/h tandis qu'elle sera de 2,5 l/h lorsque ce dernier fonctionnera dans le cadre du système de décontamination 3.

Par ailleurs, une résistance chauffante 26 plongée dans le liquide à décontaminer 11 permet d'amener la température de ce liquide 11 jusqu'à environ 70 °C.

L'action combinée de l'oscillateur piézo-électrique 12 et de la résistance chauffante 26 permet de traiter un large spectre de bactéries.

En variante non représentée, la résistance chauffante 26 pourrait également se trouver dans le réservoir annexe 14, la propagation de la chaleur jusqu'au réservoir de nébulisation 10 s'effectuant par l'intermédiaire du conduit 15.

L'oscillateur piézo-électrique 12 engendre, outre la décontamination du liquide 11 contenu dans le réservoir de nébulisation 10, la formation de fines gouttelettes 13 qui, comme dans le cadre du fonctionnement du système de rafraichissement 2, sont acheminées jusqu'au conduit d'entraînement 7 via le conduit d'acheminement 17. Les moyens d'acheminement sont identiques à ceux décrits dans le cadre du système de rafraichissement 2.

Le pulseur d'air 5 en fonctionnement génère un flux d'air 6 qui entraîne les fines gouttelettes 13 jusqu'à la grille 20 qui est fermée au moyen des volets motorisés 25. Les fines gouttelettes 13 ruissellent alors le long de la grille fermée 20 en formant un liquide ruisselant qui est récupéré dans le bac à condensats 21, circule par gravité dans le conduit d'évacuation 22 jusqu'au réservoir annexe 14 duquel il peut être réintroduit dans le réservoir de nébulisation 10 formant réservoir de liquide à décontaminer 11 lorsque le système de décontamination 3 est en fonctionnement.

Ainsi, une boucle de recirculation du liquide illustré schématiquement par la flèche 28 est mise en oeuvre, cette boucle de recirculation 28 comprenant le réservoir de nébulisation 10, le conduit d'acheminement 17, la partie du conduit d'injection 7 située entre le conduit d'acheminement 17 et la grille 20, la grille 20 en position fermée au moyen des volets motorisés 25, le conduit d'évacuation 22, le réservoir annexe 14 et le conduit 15 entre le réservoir annexe 14 et le réservoir de nébulisation 10.

Bien entendu, cette boucle de recirculation 28 comprend un système de décontamination 29 formé dans cet exemple par l'oscillateur piézo-électrique 12 et la résistante chauffante 26, ce système étant intégré dans cette boucle de recirculation 28.

Le système de décontamination 29 pourra fonctionner uniquement avec l'oscillateur piézo-électrique 12 lorsque la qualité de l'eau 11 dans le réservoir 10 ne nécessite pas l'utilisation combinée de l'oscillateur piézo-électrique 12 et de la résistance chauffante 26.

On comprend que le système de rafraichissement 2 et le système de décontamination 3 fonctionnent de façon alternative selon des cycles respectivement de rafraichissement et de décontamination.

A cet effet, on pourra prévoir un dispositif de pilotage non représenté qui commande automatiquement le déclenchement d'un ou de plusieurs cycles de décontamination.

Par exemple, le déclenchement d'un cycle de décontamination pourra être activé toutes les 24 heures que le système de rafraichissement ait fonctionné ou non. On pourra également prévoir qu'un cycle de décontamination est activé selon un temps déterminée de fonctionnement du système de rafraichissement ou de non fonctionnement du système de rafraichissement. On pourra également prévoir l'activation d'un cycle de décontamination selon le volume d'eau contenu dans le réservoir de nébulisation 10 ou selon la température de l'eau dans ce même réservoir 10.

Enfin, l'activation d'un cycle de décontamination pourra être commandée selon plusieurs critères définis précédemment.

On comprend que les moyens mis en oeuvre pour réaliser la décontamination de l'eau stockée 11 dans le réservoir de nébulisation 10 sont extrêmement simple à mettre en oeuvre.

En effet, pour passer d'un cycle de rafraichissement à un cycle de décontamination, il suffira de commander en fermeture les volets motorisés 25 de la grille 20 et d'adapter la puissance de l'oscillateur piézo-électrique 12.

Par ailleurs, l'oscillateur piézo-électrique 12 étant aussi efficace en tant que nébuliseur qu'en tant de système de décontamination, les cycles de rafraichissement et de décontamination présenteront une efficacité respective optimale.

Le système de décontamination de l'invention permet de façon générale de garantir la décontamination d'un liquide stagnant dans un réservoir par la réalisation d'une boucle de circulation du liquide et la présence d'un système à ultrasons au sein de la dite boucle.

Intégré à un système de rafraichissement d'air par nébulisation, le système de décontamination de l'invention présente l'avantage de ne nécessiter que peu d'adaptation puisque la majeure partie des éléments de la boucle de recirculation sont déjà compris dans le système de rafraichissement.

L'utilisation des deux fonctionnalités de l'oscillateur piézo-électrique 12 permet de garantir à l'utilisateur une qualité de l'eau utilisée pour le rafraichissement de l'air.

En outre, l'automatisation de l'activation des cycles de fonctionnement évite l'intervention de l'utilisateur.

Enfin, le dispositif de décontamination de l'invention 3 est présenté dans l'exemple ci-dessus comme intégré dans le véhicule au niveau de la console centrale 1, mais on pourra bien entendu prévoir que le dispositif de décontamination 3 soit autrement intégré dans le véhicule.

## Revendications

1. Système de rafraichissement de l'air d'une enceinte par nébulisation à partir d'un liquide de nébulisation contenu dans un réservoir de nébulisation, comprenant un nébuliseur à ultrasons (12) générant des fines gouttelettes (13) à partir du liquide de nébulisation (11), et des moyens d'entraînement (6) des fines gouttelettes (13) vers l'enceinte via un conduit d'entraînement (7), **caractérisé en ce qu'**il comprend un dispositif de décontamination apte à décontaminer le liquide de nébulisation comprenant des moyens (25) aptes à former une boucle de recirculation (28) du liquide (11) depuis et jusqu'au dit réservoir (10), laquelle boucle de recirculation (28) comprenant un système à ultrasons (12) qui est plongé dans le liquide (11) formant au moins en partie système de décontamination (29) du dit liquide (11) ; le système à ultrasons (12) du dispositif de décontamination (29) étant le nébuliseur à ultrasons (12).

2. Système selon la revendication 1, **caractérisé en ce que** le nébuliseur à ultrasons (12) et le système à ultrasons (12) sont constitués d'un oscillateur piézo-électrique (12) qui est plongé dans le liquide de nébulisation (11) formant liquide à décontaminer (11) lorsque le dit dispositif de décontamination (3) est en fonctionnement.

3. Système selon l'une quelconque des revendications 1 à 2, **caractérisé en ce que** le système de décontamination (29) comprend une résistance chauffante (26) apte à chauffer le liquide à décontaminer (11) à une température d'environ 70°C.

4. Système selon l'une quelconque des revendications 1 à 3, **caractérisé en ce qu'**il comporte :
- une grille (10) susceptible d'adopter une position d'ouverture dans laquelle elle est traversée par au moins les fines gouttelettes (13) circulant dans le conduit d'entraînement (7), ce dont il résulte la formation de condensats, et des moyens d'obturation (25) de la grille (20) qui adopte ainsi une position de fermeture dans laquelle les fines gouttelettes (13) ruissellent le long de sa surface ce dont il résulte la formation d'un liquide ruisselant, et
- un réservoir annexe de liquide (14) couplé au réservoir de nébulisation (10) et recevant les dits condensats lorsque la grille (20) est en position d'ouverture et le liquide ruisselant lorsque la grille (20) est en position de fermeture et **en ce que** la boucle de circulation (28) comprend au moins le réservoir de nébulisation (10), au moins une partie du conduit d'entraînement (7) des fines gouttelettes (13) jusqu'à la grille (20), la grille (20) en position de fermeture, et le réservoir annexe (14).

5. Système selon la revendication 4, **caractérisé en ce qu'**il comporte des moyens d'entrée d'air de l'enceinte (4) dans le système de rafraichissement (2), des moyens d'accélération d'air (5) de façon à créer un flux d'air soufflé (6) apte à entraîner les fines gouttelettes (13) vers la grille (20) en position ouverte ou fermée.

6. Console centrale de véhicule notamment automobile, **caractérisée en ce qu'**elle comprend le système de rafraichissement selon l'une quelconque des revendications 1 à 5 qui est orienté de façon que l'air rafraichi soufflé soit dirigé vers les sièges arrière du dit véhicule.

7. Procédé de rafraichissement de l'air d'une enceinte à partir d'un système de nébulisation d'un liquide mettant en oeuvre le système de rafraichissement selon l'une quelconque des revendications 1 à 5, lequel procédé comprend au moins les étapes suivantes :
- un cycle de rafraichissement au cours duquel des fines gouttelettes (13) générées par un nébuliseur à ultrasons (12) qui est plongé dans le liquide de nébulisation (11) d'un réservoir de nébulisation (10), sont entraînées vers l'enceinte, et
- un cycle de décontamination au cours duquel le liquide à décontaminer (11) stocké dans le réservoir de nébulisation (10) subit une étape de décontamination en étant soumis au nébuliseur à ultrasons (12) et en circulant dans une boucle de recirculation (28) depuis et jusqu'au réservoir de nébulisation (10), en ce que la puissance du nébuliseur à ultrasons (12) est supérieure lors de son fonctionnement au cours du cycle de décontamination, comparée à sa puissance lors de son fonctionnement au cours du cycle de rafraichissement.

8. Procédé selon la revendication 7 dans laquelle le cycle de décontamination est commandé en fonctionnement :
- soit lorsque qu'aucun cycle de rafraîchissement n'a été effectué pendant un temps déterminé,
- soit au bout d'une période déterminée de fonctionnement du cycle de rafraichissement,
- soit au bout d'une période déterminée de fonctionnement ou non du cycle de rafraichissement,
- soit selon le niveau de liquide contenu dans le réservoir de nébulisation,
- soit selon la température du liquide contenu dans le réservoir de nébulisation,
- soit selon une pluralité de critères précédemment définis.

9. Véhicule notamment un véhicule automobile, **caractérisé en ce qu'**il comprend un système de rafraichissement de l'air selon la revendication 1.

## Patentansprüche

1. System zum Auffrischen der Luft eines geschlossenen Raumes durch Zerstäubung einer Zerstäubungsflüssigkeit, die in einem Zerstäubungsbehälter enthalten ist, umfassend einen Ultraschall-Zerstäuber (12), der aus der Zerstäubungsflüssigkeit (11) feine Tröpfchen (13) generiert, sowie Mittel zur Beförderung (6) der feinen Tröpfchen (13) durch eine Beförderungsleitung (7) in den geschlossenen Raum, **dadurch gekennzeichnet, dass** es eine Dekontaminierungsvorrichtung umfasst, die geeignet ist, die Zerstäubungsflüssigkeit zu dekontaminieren, umfassend Vorrichtungen (25), die geeignet sind, einen Rezirkulationskreis (28) der Flüssigkeit (11) vom und in den besagten Behälter (10) zu bilden, wobei der Rezirkulationskreis (28) ein Ultraschallsystem (12) umfasst, das in die Flüssigkeit (11) eingetaucht ist, und zumindest teilweise das Dekontaminierungssystem (29) der besagten Flüssigkeit (11) bildet; das Ultraschallsystem (12) der Dekontaminierungsvorrichtung (29) ist dabei der Ultraschall-Zerstäuber (12).

2. System nach Anspruch 1, **dadurch gekennzeichnet, dass** der Ultraschall-Zerstäuber (12) und das Ultraschallsystem (12) aus einem piezoelektrischen Oszillator (12) gebildet werden, der in die Flüssigkeit (11) eingetaucht ist, die die zu dekontaminierende Flüssigkeit (11) bildet, wenn die besagte Dekontaminierungsvorrichtung (3) in Betrieb ist.

3. System nach irgendeinem der Ansprüche 1 bis 2, **dadurch gekennzeichnet, dass** das Dekontaminierungssystem (29) einen Heizwiderstand (26) umfasst, der geeignet ist, die zu dekontaminierende Flüssigkeit (11) auf eine Temperatur von etwa 70°C zu erhitzen.

4. System nach irgendeinem der Ansprüche 1 bis 3, **dadurch gekennzeichnet, dass** es folgendes umfasst:
- ein Gitter (10), das dafür vorgesehen ist, eine Öffnungsstellung einzunehmen, in der es zumindest von den feinen Tröpfchen (13) durchströmt wird, die in der Beförderungsleitung (7) zirkulieren, woraus die Bildung von Kondensaten hervorgeht, und Mittel zum Abdecken (25) des Gitters (20), welches somit eine Schließstellung einnimmt, in der die feinen Tröpfchen (13) an seiner Oberfläche entlangrieseln, woraus die Bildung einer fließenden Flüssigkeit hervorgeht.
- einen Zusatzflüssigkeitsbehälter (14), der an den Zerstäubungsbehälter (10) gekoppelt ist, und die besagten Kondensate auffängt, wenn sich das Gitter (20) in der Öffnungsstellung befindet, sowie die fließende Flüssigkeit, wenn sich das Gitter (20) in der Schließstellung befindet
und dadurch, dass der Rezirkulationskreis (28) zumindest den Zerstäubungsbehälter (10) umfasst, zumindest einen Teil der Beförderungsleitung (7) für die feinen Tröpfchen (13) bis zum Gitter (20), das Gitter (20) in der Schließstellung und den Zusatzbehälter (14).

5. System nach Anspruch 4, **dadurch gekennzeichnet, dass** es Vorrichtungen für den Eintritt der Luft aus dem geschlossenen Raum (4) in das Auffrischungssystem (2) umfasst, Luftbeschleunigungsvorrichtungen (5), um eine Blasluftströmung (6) zu erzeugen, die geeignet ist, die feinen Tröpfchen (13) zum Gitter (20) in der offenen oder geschlossenen Stellung zu befördern.

6. Mittelkonsole eines Fahrzeugs, vor allem eines Kraftfahrzeugs, **dadurch gekennzeichnet, dass** sie das Auffrischungssystem nach irgendeinem der Ansprüche 1 bis 5 umfasst, das so orientiert ist, dass die aufgefrischte Blasluft in Richtung der Rücksitze des besagten Fahrzeugs geleitet wird.

7. Verfahren zum Auffrischen der Luft eines geschlossenen Raumes durch ein System zum Zerstäuben einer Flüssigkeit, das das Auffrischungssystem nach irgendeinem der Ansprüche 1 bis 5 anwendet, wobei das besagte Verfahren zumindest die folgenden Schritte umfasst:
- einen Auffrischungszyklus, im Laufe dessen feine Tröpfchen (13), die durch einen Ultraschall-Zerstäuber (12) generiert werden, der in die Zerstäubungsflüssigkeit (11) eines Zerstäubungsbehälters (10) eingetaucht ist, in Richtung des geschlossenen Raumes befördert werden, und
- einen Dekontaminierungszyklus, im Laufe dessen die im Zerstäubungsbehälter (10) befindliche zu dekontaminierende Flüssigkeit (11) einen Dekontaminierungsschritt erfährt, indem sie dem Ultraschall-Zerstäuber (12) unterworfen wird, und in einem Rezirkulationskreis (28) vom und in den besagten Zerstäubungsbehälter (10) zirkuliert,
und dadurch, dass die Leistung des Ultraschall-Zerstäubers (12) bei seinem Betrieb im Laufe des Dekontaminierungszyklus im Vergleich zu seiner Leistung bei seinem Betrieb im Laufe des Auffrischungszyklus größer ist.

8. Verfahren nach Anspruch 7, bei dem der Dekontaminierungszyklus im Betrieb angesteuert wird:
- entweder, wenn während einer bestimmten Zeit kein Auffrischungszyklus durchgeführt wurde,
- oder am Ende einer bestimmten Betriebsdauer des Auffrischungszyklus,
- oder am Ende einer bestimmten oder nicht bestimmten Betriebsdauer des Auffrischungszyklus,
- oder in Abhängigkeit vom Füllstand der Flüssigkeit im Zerstäubungsbehälter,
- oder in Abhängigkeit von der Temperatur der Flüssigkeit im Zerstäubungsbehälter,
- oder in Abhängigkeit einer Vielzahl von zuvor festgelegten Kriterien.

9. Fahrzeug, vor allem ein Kraftfahrzeug, **dadurch gekennzeichnet, dass** es ein Luftauffrischungssystem nach Anspruch 1 enthält.

## Claims

1. System for cooling the air in an chamber by nebulisation using a nebulisation liquid contained in a nebulisation reservoir, comprising an ultrasound nebuliser (12) generating fine droplets (13) from the nebulisation liquid (11), and means (6) for driving the fine droplets (13) to the chamber via an entrainment pipe (7), **characterised in that** it comprises a decontamination device able to decontaminate the nebulisation liquid comprising means (25) able to form a recirculation loop (28) for the liquid (11) from and to said reservoir (10), said recirculation loop (28) comprising an ultrasound system (12) that is immersed in the liquid (11) forming at least partly the decontamination system (29) for said liquid (11); the ultrasound system (12) of the decontamination device (29) being the ultrasound nebuliser (12).

2. System according to claim 1, **characterised in that** the ultrasound nebuliser (12) and the ultrasound system (12) consist of a piezoelectric oscillator (12) that is immersed in the nebulisation liquid (11) forming the liquid to be decontaminated (11) when said decontamination device (3) is in operation.

3. System according to either one of claims 1 to 2, **characterised in that** the decontamination system (29) comprises a heating element (26) able to heat the liquid (11) to be decontaminated to a temperature of approximately 70°C.

4. System according to any one of claims 1 to 3, **characterised in that** it comprises:
- a grille (10) able to adopt an open position in which it has at least the fine droplets (13) circulating in the entrainment pipe (7) passing through it, from which the formation of condensates results, and means (25) for closing off the grille (20), which thus adopts a closed position in which the fine droplets (13) trickle along its surface, which results in the formation of a runoff liquid, and
- a related liquid reservoir (14) coupled to the nebulisation reservoir (10) and receiving said condensates when the grille (20) is in the open position and the runoff liquid when the grille (20) is in the closed position
and **in that** the circulation loop (28) comprises at least the nebulisation reservoir (10), at least part of the pipe (7) entraining the fine droplets (13) as far as the grille (20), the grille (20) in the closed position, and the related reservoir (14).

5. System according to claim 4, **characterised in that** it comprises means for the entry of air from the chamber (4) into the cooling system (2), means (5) for accelerating air so as to create a blown air flow (6) able to entrain the fine droplets (13) to the grille (20) in the open or closed position.

6. Central console of a vehicle, in particular of a car, **characterised in that** it comprises the cooling system according to any one of claims 1 to 5, which is oriented so that the blown cooled air is directed towards the rear seats of said vehicle.

7. Method for cooling the air in a chamber from a liquid-nebulisation system using the cooling system according to any one of claims 1 to 5, said method comprising at least the following steps:
- a cooling cycle during which fine droplets (13) generated by an ultrasound nebuliser (12) that is immersed in the nebulisation liquid (11) in a nebulisation reservoir (10) are entrained towards the chamber, and
- a decontamination cycle during which the liquid to be decontaminated (11) stored in the nebulisation reservoir (10) undergoes a decontamination step while being subjected to the ultrasound nebuliser (10) and circulating in a recirculation loop (28) from and to the nebulisation reservoir (10), and in that the power of the ultrasound nebuliser (12) is greater when it is operating during the decontamination cycle compared with its power when it is operating during the cooling cycle.

8. Method according to claim 7, in which the decontamination cycle is controlled operationally:
- either when no cooling cycle has been implemented for a given time,
- or at the end of a given period of operation of the cooling cycle,
- or at the end of a given period of operation or not of the cooling cycle,
- or according to the level of liquid contained in the nebulisation reservoir,
- or according to the temperature of the liquid contained in the nebulisation reservoir,
- or according to a plurality of criteria defined above.

9. Vehicle, in particular an automobile, **characterised in that** it comprises an air cooling system according to claim 1.
